# EUROPEAN PATENT SPECIFICATION

(11) **EP 1 872 347 B1**
(45) Date of publication and mention of the grant of the patent: **23.05.2012**
(21) Application number: 06717059.7
(22) Date of filing: 28.03.2006
(51) Int. Cl.: G08B 27/00, H04W 4/22

(54) **EMERGENCY WARNING SERVICE**
NOTFALLWARNUNGSDIENST
SERVICE D'AVERTISSEMENT D'URGENCE

(30) Priority: 07.04.2005 US 669013 P
(43) Date of publication of application: 02.01.2008
(73) Proprietor: Lidgren, Lars, 222 21 Lund (SE); Lidgren, Alexander, 224 71 Lund (SE)
(72) Inventor: Lidgren, Lars, 222 21 Lund (SE); Lidgren, Alexander, 224 71 Lund (SE)
(74) Representative: Romedahl, Bengt
(86) International application number: PCT/SE2006/000377
(87) International publication number: WO 2006/107250

(56) References cited:
- US-A- 6 112 074
- US-A1- 2002 171 552
- US-A1- 2004 103 158
- US-A1- 2004 203 562
- US-B1- 6 816 878
- US-B2- 6 509 833
- DATABASE WPI Week 200418, Derwent Publications Ltd., London, GB; Class W01, AN 2004-188533, XP008114639 & KR 2003 084 859 A (SUNJIN TECH CO LTD) 01 November 2003

## Description

### Field of the invention

The present invention relates to a method of operating a mobile communication system for providing users of mobile communication terminals with messages relating to emergency situations, as well as a system and a mobile communication terminal configured for such a service.

### Background

Improving public and personal safety during emergency situations such as natural disasters, accidents and crime situations will always be regarded as a vital task in any society.

The development of communication techniques such as mobile communication systems and the Internet has provided a number of technical solutions to meet such needs for increased public and personal safety. Examples of such systems can be found, for example, in US-patent number 6,392,538 B1, in US patent number 6,745,021 B1 as well as in US patent application publication number 2004/0075552 A1 and US 2004 0103158 A1.

The systems and methods described in these examples of prior art are typically directed to specific technical solutions, involving numerous technical features relating to communication links and sensors etc.

However, prior art does not disclose a service that can be provided to users and be beneficial to users while at the same time be beneficial to a provider of the service.

### Summary of the invention

An object of the present invention is hence to overcome drawbacks related to prior art in terms of providing an emergency warning service and a system that is beneficial to both a user and a provider of the service.

In a first aspect, from a point of view of an operator of a mobile communication system, the present invention provides an emergency warning service for providing emergency related information to users of communication terminals in the mobile communication system. The service comprises a number of separate procedures and steps, including a procedure of establishing a service agreement in relation with a user. The service agreement comprises at least an identification of a user and a time period during which period the user is allowed access to emergency warnings.

After receiving an emergency warning message from an emergency warning message provider, the message comprising information at least regarding a type of emergency and an emergency location, it is decided whether or not the user is to receive the warning message. The decision is based at least on said service agreement. Then, depending on the decision, at least said warning message is transmitted to the user.

The type of emergency may be any, including a natural disaster, an accident and a crime. Examples of these types of emergencies are natural disasters such as earthquakes, tsunamis and hurricanes, accidents such as explosions, gas leaks, traffic accidents including any type of vehicle, crime situations such as terrorist attacks and other situations where a relatively large number of persons are at risk of being injured or otherwise affected by the emergency situation.

An advantage of the invention, from the point of view of an operator of a mobile communication system in which such an emergency warning service is implemented, is that it enables the operator to provide improved security for users wishing to obtain a useful service that enables them to receive warnings of emergencies. Moreover, the invention allows the operator to charge users for providing the service, for example when establishing the service agreement, and thereby benefit financially.

By compiling and transmitting helping information relating to the emergency to the users, the invention provides the added advantage of actively directing a user on how to obtain further assistance to relieve the user from the emergency situation. Such helping information may relate to any of an emergency rescue service, a hospital, an embassy and a transport service provider and may comprise any of a telephone number, an address and a map. As the skilled person will realize, present techniques in mobile communication systems allow almost any kind of information to be transmitted to and presented in a mobile communication device, including text, graphical information and sound.

Needless to say, when being in an emergency situation such as an earthquake, a user will find it extremely helpful to receive directions on how to get to a hospital and even to receive a map showing the nearest safe location, for example.

The helping information may also comprise such information that prompts or instructs the receiver to actively fetch additional helping information, in contrast to the more passive "reception only" situation described above. In practice this may entail providing links, such as hyper links, to information on serving information centers associated with, e.g., hospitals. Such extended helping information may be regarded, from the point of view of the provider of the emergency warning service, as a "premium" service, which would allow for a more expensive subscription fee, for example.

A variation of this aspect of the invention is to employ message transmission by way of using broadcasting methods, such as cell broadcast service (CBS) in a cellular network or any other terrestrial or satellite based broadcasting system within which a mobile terminal is capable of communicating or at least receiving information. Hence, this aspect of the invention may also be formulated as an emergency warning service in a mobile communication system for providing emergency related information to users of communication terminals in the mobile communication system, comprising a number of steps. These steps include establishing a service agreement comprising at least an identification of a user and a time period during which period said user is allowed access to emergency warnings, receiving an emergency warning message from an emergency warning message provider, the message comprising information at least regarding a type of emergency and an emergency location. The warning message is then transmitted, by broadcasting. A request for additional helping information is then received from the user, and after receiving the request it is decided whether or not the user is to have access to the additional helping information, the decision being based at least on the service agreement. Depending on the decision, said additional helping information is then provided to the user.

The fact that broadcasting may be used to provide the warning message implies that the warning messages are, so to speak, "free" for all to receive within an area where the broadcasting takes place. A service agreement with a user then regarding terms relating to access to emergency warnings is then to be interpreted as terms relating to access to additional helping information, which is provided on request from the user upon receiving a broadcast emergency warning message. The additional helping information may comprise any desired information, including the helping information, or subset thereof, described above.

In a second aspect, from a point of view of an operator of an emergency warning message provider, the present invention provides an emergency warning service for providing emergency related information to users of communication terminals, said terminals forming part of a mobile communication system. The service comprises a number of separate procedures and steps, including a procedure of establishing a service agreement in relation with a user. The agreement comprises at least an identification of a user and a time period during which period the user is allowed access to emergency warnings.

After receiving an emergency signal from an emergency detecting entity, the emergency detecting entity being capable of detecting an emergency and an emergency location, an emergency warning message is compiled, the message comprising information at least regarding a type of the emergency and the emergency location. It is then decided whether or not the user is to receive the warning message. The decision is based, at least said warning message is transmitted to the user via the mobile communication system.

In addition to the advantages as discussed above, an advantage from the point of view of an operator of an emergency warning message provider is that it provides a possibility to offer the service to several operators of mobile communication systems and thereby provide an added financial gain.

The emergency warning message provider will typically be able, given its resources for analyzing emergencies, to grade the emergency warnings in order to provide a reliable service where transmissions of unnecessary warnings are avoided.

Similar to the aspect described above, a variation of this aspect of the invention is to employ message transmission by way of using broadcasting methods, such as cell broadcast service (CBS) in a cellular network or any other terrestrial or satellite based broadcasting system within which a mobile terminal is capable of communicating or at least receiving information. Hence, this aspect of the invention may also be formulated as an emergency warning service for providing emergency related information to users of communication terminals in the mobile communication system, comprising a number of steps. These steps include establishing a service agreement comprising at least an identification of a user and a time period during which period the user is allowed access to emergency warnings, receiving an emergency signal from an emergency detecting entity, the emergency detecting entity being capable of detecting an emergency and an emergency location. An emergency warning message is then compiled, the message comprising information at least regarding a type of the emergency and an emergency location. The warning message is then provided to a broadcasting entity for broadcasting of the emergency warning message. Then, a request for additional helping information is received from the user, whereupon it is decided whether or not the user is to have access to the additional helping information, the decision being based at least on the service agreement. Depending on the decision, the additional helping information is then provided to the user.

The fact that broadcasting may be used to provide the warning message implies that the warning messages are, so to speak, "free" for all to receive within an area where the broadcasting takes place. A service agreement with a user then regarding terms relating to access to emergency warnings is then to be interpreted as terms relating to access to additional helping information, which is provided on request from the user upon receiving a broadcast emergency warning message. The additional helping information may comprise any desired information, including the helping information, or subset thereof, described above.

An additional level of service may be to confirm, from the emergency warning message provider to a specified recipient who may be any person who is not located at the same location as the user/subscriber, that a warning message has been transmitted to the user/subscriber and actually received by the user/subscriber. In cases where broadcasting is used to provide an emergency warning message, such a confirmation may be obtained by recognizing that the user/subscriber has requested additional helping information. This is advantageous in that it provides added value to the user by the simple fact that it is a quick way in which, e.g., a relative may be informed that the user is alive and active.

Other aspects of the present invention are a system and mobile communication terminals that comprises means that are configured to provide a service as described above. Typically, such means comprise controllers that are programmed with software instructions to perform sequences of steps that realize a service as described above.

### Brief description of the drawings

Figure 1 schematically illustrates interconnected communication networks and systems in which embodiments of the present invention is realized.
Figure 2 is a flow chart illustrating a service according to an embodiment of the present invention.
Figure 3 is a flow chart illustrating a service according to another embodiment of the present invention.
Figure 4 is a flow chart illustrating a service according to still another embodiment of the present invention.
Figure 5 is a flow chart illustrating a service according to yet another embodiment of the present invention.

### Preferred embodiments

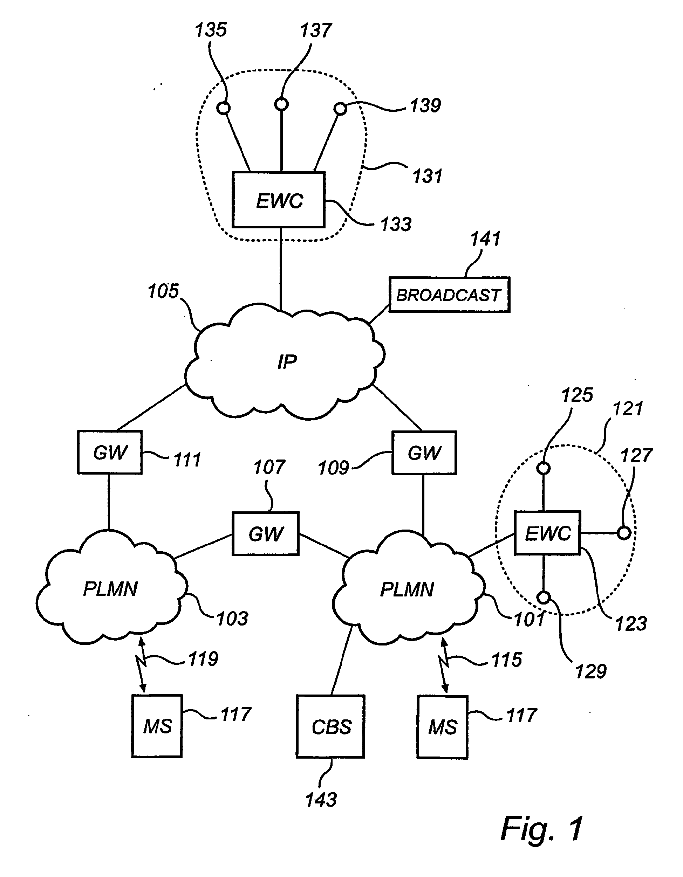

Figure 1 shows a first mobile communication network 101, connected via a gateway 107 to a second mobile communication network 103. Typically, these mobile communication networks are in the form of cellular communication networks and may be any of the well known systems GSM/GPRS, UMTS, CDMA 2000 etc., as the skilled person will realize. The mobile communication networks 101 and 103 are both connected, via a respective gateway 109 and 111, to a data communication network 105 such as the Internet. In order to cater for broadcasting of messages, the first mobile communication network 101 is also equipped with a cell broadcast system 143.

A first mobile communication terminal 113 forms part of the first mobile communication network 101, as illustrated by a first air interface 115. A second mobile communication terminal 117 forms part of the second mobile communication network 103, as illustrated by a second air interface 119. The terminals 113, 117 are configured to communicate with each other or any other terminal in the mobile communication networks 101, 103 or in any connected network, such as the data communication network 105. No further details regarding specific communication or signaling schemes performed in the networks and terminals will be given here, as this is known to the person skilled in the art.

A first emergency warning system 121 is connected to the first mobile communication network 101. The first emergency warning system 121 comprises a first emergency warning centre 123, to which a plurality of emergency detecting entities 125, 127, 129 are connected. The emergency detecting entities 125, 127, 129 may include sensors of physical parameters such as earthquake, hurricane and tsunami sensors as well as entities capable of detecting by way of communication with external emergency information providers such as weather observers, fire and police departments and any governmental and non-governmental organizations etc.

The emergency warning centre 123 is capable of detecting and analyzing different types of emergency situations and their locations together with any desirable parameter regarding an emergency. The centre 123 is typically a function comprising both hardware, software and human operators, as will be discussed further below. Needless to say, many more emergency detecting entities than the three illustrated will typically exist in a typical system in operation, although these have been omitted from the description for the sake of clarity.

A second emergency warning system 131 is connected to the data communication network 105 in a similar manner as the first emergency warning system 121 is connected to the first mobile communication network 101. The second emergency warning system 131 comprises a second emergency warning centre 123, to which a plurality of emergency detecting entities 135, 137, 139 are connected.

The emergency warning systems 121 and 131 are connected and communicate with the first mobile communication network 101 and the data communication network 105, respectively, by means of communication protocols and interfaces known to the person skilled in the art.

Regarding the emergency warning systems 121 and 131, they are responsible for collect any emergency detected by the emergency detecting entities 125, 127, 129, 135, 137, 139 and to judge the severity and extent of the emergency situation. The emergency warning systems 121, 131 also create and provide emergency warning messages that are to be transmitted to users that have indicated a desire to receive such warning messages. Typically, an agreement in the form of, e.g., a subscription is established between an operator of an emergency warning system and a user in order to specify parameters such as a time interval during which warning messages are to be sent to the user and geographical areas of interest.

The judging of the severity and extent of an emergency situation that has been detected and supplied by a detecting entity 125, 127, 129, 135, 137, 139 is typically performed by human operators at the emergency warning centre 123, 133. Naturally, the judging of severity and extent is performed by utilizing appropriately programmed computers and computer networks, as the skilled person will realize.

The emergency warning centre 123, 133 is also capable of compiling and transmitting helping information relating to the emergency. As discussed above, such helping information may relate to any of an emergency rescue service, a hospital, an embassy and a transport service provider and may comprise any of a telephone number, an address and a map. As the skilled person will realize, present techniques in mobile communication systems allow almost any kind of information to be transmitted to and presented in a mobile communication device, including text, graphical information and sound.

As indicated in figure 1, an emergency warning system 121 may be a system that is located close to the mobile communication network 101 and actually form a physical, or at least a logical, part of the mobile communication network 101. The emergency warning system 121 may be under the control of (e.g. owned by) the operator of the mobile communication network 101. This is a situation that typically is of great interest to an operator of a mobile communication system, not least for economical reasons, since the provision of an emergency warning service is expected to be desired by a large number of users that are already customers of the operator.

Nevertheless, as is also illustrated in figure 1, an emergency warning system may also be located such that it does not form part of a mobile communication system. For example, the second emergency warning system 131 is shown in figure 1 to be operated by an "independent operator" and as such will typically offer the service of providing emergency warning messages to users of mobile communication networks 101, 103 via respective mobile communication network operators as well as offering the service directly to the users.

A broadcasting system 141 is also indicated in figure 1. The broadcasting system 141 may perform warning message transmission from any of the emergency warning systems 121, 131 by utilizing broadcasting techniques known in the art, terrestrial and/or satellite based. Needless to say, the broadcasting system 141 may be connected to any of the emergency warning systems 121, 131 as illustrated in figure 1, via the communication network 101, or via any other communication path, such as being directly connected to any of the emergency warning systems 121, 131.

Typically, the means necessary to perform the invention comprise controllers in the communicating systems that are programmed with software instructions to perform sequences of steps that implement the service.

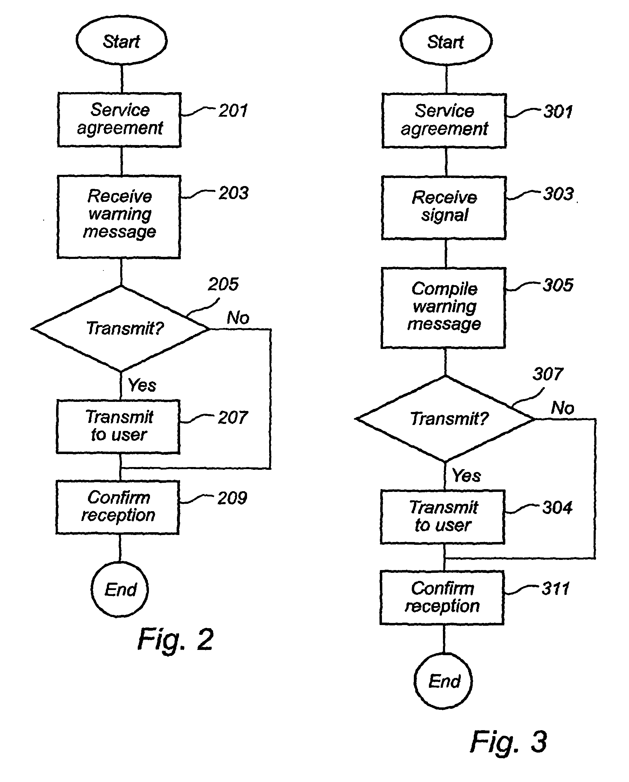

Turning now to figures 2 to 5, where preferred embodiments of a service according to the invention will be described in terms of steps performed by parties in interconnected networks such as the networks exemplified in figure 1.

Figure 2 illustrates steps performed in an emergency warning service, from a point of view of an operator of the first mobile communication system 121 that is in control of the first emergency warning system 121 described above in connection with figure 1. The service provides an emergency warning service for providing emergency related information to users of communication terminals in the mobile communication system, typically the users in the first mobile communication system 101, as represented by the first communication terminal 113.

The service comprises a number of separate procedures and steps performed in the first mobile communication system 101, commencing with a procedure of establishing a service agreement in relation with a user, in an establishing step 201. As exemplified above, the service agreement may comprise at least an identification of a user and a time period during which period the user is allowed access to emergency warnings.

In a reception step 203, an emergency warning message is received from an emergency warning message provider in the form of the first emergency message service 121, the message comprising information at least regarding a type of emergency and an emergency location. Then it is decided, in a decision step 205, whether or not the user is to receive the warning message. The decision is based at least on the established service agreement. Then, depending on the decision, the warning message, together with any helping information, as discussed above, is transmitted to the user in a transmission step 207. In a confirming step 209, the reception of the warning message is confirmed from the user to the provider. Such a confirmation is typically realized in such a way that the user is not required to actively send the confirmation, but rather an automatic procedure involving detecting that the warning message has been displayed and automatic transmission of the confirmation message, e.g. an SMS message.

Figure 3 illustrates steps performed in an emergency warning service, from a point of view of an "independent" operator of the second emergency warning system 131 described above in connection with figure 1. The service provides an emergency warning service for providing emergency related information to users of communication terminals in a mobile communication system, typically the users in the first mobile communication system 101 and users in the second mobile communication system 103, as represented by the first and second communication terminals 113 and 117, respectively.

The service comprises a number of separate procedures and steps performed in the second emergency warning system 131, commencing with a procedure of establishing a service agreement in relation with a user, in an establishing step 301. As exemplified above, the service agreement may comprise at least an identification of a user and a time period during which period the user is allowed access to emergency warnings.

In a reception step 303, an emergency signal is received from an emergency detecting entity 135, 137, 139, the emergency detecting entity being capable of detecting an emergency and an emergency location. Then, in a compilation step 305, an emergency warning message is compiled, the message comprising information at least regarding a type of the emergency and the emergency location, but preferably also include helping information as discussed above.

Then it is decided, in a decision step 307, whether or not the user is to receive the warning message. The decision is based at least on the established service agreement. Then, depending on the decision, the warning message, together with any helping information, as discussed above, is transmitted to the user in a transmission step 309. A confirmation step 311, similar to the confirmation step 209 described above, then follows.

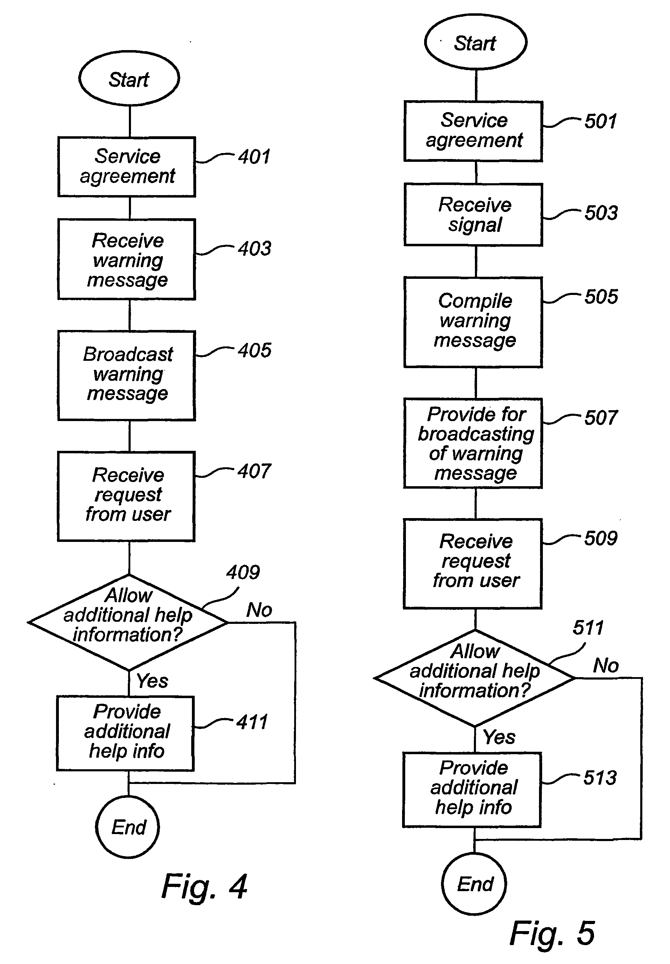

Figure 4 illustrates steps performed in an emergency warning service, from a point of view of an operator of the first mobile communication system 121 that is in control of the first emergency warning system 121 described above in connection with figure 1. The service provides an emergency warning service for providing emergency related information to users of communication terminals in the mobile communication system, typically the users in the first mobile communication system 101, as represented by the first communication terminal 113. Here, the cell broadcast system 143 is utilized to provide emergency warning messages to the users.

The service comprises a number of separate procedures and steps performed in the first mobile communication system 101, commencing with a procedure of establishing a service agreement in relation with a user, in an establishing step 401. As exemplified above, the service agreement may comprise at least an identification of a user and a time period during which period the user is allowed access to emergency warnings. Here, the access to emergency warnings is to be interpreted as access to additional helping information, as described elsewhere.

In a reception step 403, an emergency warning message is received from an emergency warning message provider in the form of the first emergency message service 121, the message comprising information at least regarding a type of emergency and an emergency location. The warning message, together with any helping information, as discussed above, is then transmitted by broadcasting via the cell broadcast system 143, in a transmission step 405.

A request for additional helping information is then received in a reception step 407. The request is processed and it is then decided, in a decision step 409, whether or not the user is to be allowed to access the requested additional helping information. The decision is based at least on the established service agreement. Then, depending on the decision, access to the additional helping information is granted and the requested information is provided to the user in a provision step 411. Figure 5 illustrates steps performed in an emergency warning service, from a point of view of an "independent" operator of the second emergency warning system 131 described above in connection with figure 1. The service provides an emergency warning service for providing emergency related information to users of communication terminals in a mobile communication system, typically the users in the first mobile communication system 101 and users in the second mobile communication system 103, as represented by the first and second communication terminals 113 and 117, respectively. Here, the broadcast system 141 is utilized to provide emergency warning messages to the users.

The service comprises a number of separate procedures and steps performed in the second emergency warning system 131, commencing with a procedure of establishing a service agreement in relation with a user, in an establishing step 501. As exemplified above, the service agreement may comprise at least an identification of a user and a time period during which period the user is allowed access to emergency warnings. Here, the access to emergency warnings is to be interpreted as access to additional helping information, as described elsewhere.

In a reception step 503, an emergency signal is received from an emergency detecting entity 135, 137, 139, the emergency detecting entity being capable of detecting an emergency and an emergency location. Then, in a compilation step 505, an emergency warning message is compiled, the message comprising information at least regarding a type of the emergency and the emergency location, but preferably also include helping information as discussed above. The warning message, together with any helping information, as discussed above, is then transmitted by broadcasting via the broadcasting system 141, in a transmission step 507.

A request for additional helping information is then received in a reception step 509. The request is processed and it is then decided, in a decision step 511, whether or not the user is to be allowed to access the requested additional helping information. The decision is based at least on the established service agreement. Then, depending on the decision, access to the additional helping information is granted and the requested information is provided to the user in a provision step 513. From the viewpoint of a user a service as described above in connection with figures 2 to 5 may be exemplified in more concrete terms as follows.

The user, having a mobile communication terminal that may communicate in a mobile communication system operated by an operator who provides an emergency warning service, has agreed to a subscription of the warning service. The subscription specifies that the user will, during any specified time period, e.g. four weeks, receive emergency warnings relating to any natural disaster occurring in a specified geographical region (e.g. as specified by a list of individual countries). The subscription also specifies that the helping information that is to be provided with any warning message shall include a map indicating the location (e.g. an emergency hospital) to go to when escaping from the emergency. The value of such geographical information is further enhanced in that the terminal is equipped with a GPS receiver that will provide position information that in combination with the received map will aid the user when finding the escape route. Typically, the helping information regarding one or more emergency hospitals will also include an already established 1 to 3 quality grading of emergency hospitals.

The invention includes the service of confirming, from the emergency warning message provider to a specified recipient who may be any person who is not located at the same location as the user/subscriber, that a warning message has been transmitted to the user/subscriber and actually received by the user/subscriber. In cases where broadcasting is used to provide an emergency warning message, such a confirmation may be obtained by recognizing that the user/subscriber has requested additional helping information. Such a confirmation message may be realized by means of SMS/MMS or e-mail message, typically as specified in the user subscription profile.

## Claims

1. A method of operating a mobile communication system for providing emergency related information to users of communication terminals in said mobile communication system, comprising:
- establishing a service agreement involving at least a user and an operator of the mobile communication system, said agreement comprising at least an identification of said user and a time period during which period said user is allowed access to emergency warnings,
- receiving an emergency warning message from an emergency warning message provider, said message comprising information at least regarding a type of emergency and an emergency location,
- transmitting, by broadcasting, at least said warning message,
- receiving a request for additional helping information from said user,
- deciding whether or not said user is to have access to said additional helping information, said decision being based at least on said service agreement, and
- providing, depending on said decision, said additional helping information to the user, and
- transmitting, to a specified recipient, a confirmation that the user has requested additional helping information.

2. The method of claim 1, further comprising:
- compiling helping information relating to said emergency, and wherein
- said transmission of at least said warning message comprises transmission of said helping information.

3. The method of claim 2, wherein said compiling helping information comprises compiling information relating to any of an emergency rescue service, a hospital, an embassy and a transport service provider.

4. The method of claim 2 or claim 3, wherein said helping information comprises any of a telephone number, an address and a map.

5. The method of any of claims 1 to 4, further comprising: - transmitting information to the emergency warning message provider, said information conveying that the user has received the warning message.

6. The method of any of claims 1 to 5, wherein said type of emergency is any of a natural disaster, an accident and a crime.

## Patentansprüche

1. Verfahren zum Betreiben eines mobilen Kommunikationssystems zur Bereitstellung von notfallbezogenen Informationen an Benutzer von Kommunikationsendgeräten im mobilen Kommunikationssystem, wobei das Verfahren die folgenden Schritte umfasst:
- Erstellen einer Dienstvereinbarung, die mindestens einen Nutzer und einen Betreiber des mobilen Kommunikationssystems involviert, wobei die Vereinbarung zumindest eine Identifizierung des Benutzers und eine Zeitdauer umfasst, während welcher dem Benutzer Zugang zu Notfallwarnungen gewährt wird,
- Empfangen einer Notfallwarnungsnachricht von einem Betreiber von Notfallwarnungsnachrichten, wobei die Nachricht Informationen zumindest bezüglich eines Notfalltyps und eines Notfallortes umfasst,
- Senden, durch Übertragung, zumindest der Warnungsnachricht,
- Empfangen einer Anfrage nach zusätzlichen Hilfsinformationen vom Benutzer,
- Entscheiden darüber, ob dem Benutzer Zugang zu den zusätzlichen Hilfsinformationen gewährt werden soll oder nicht, wobei die Entscheidung zumindest auf der Dienstvereinbarung basiert, und
- Bereitstellen, abhängig von der Entscheidung, der zusätzlichen Hilfsinformationen an den Benutzer, und
- Senden einer Bestätigung an einen spezifizierten Empfänger, dass der Benutzer zusätzliche Hilfsinformationen angefragt hat.

2. Verfahren nach Anspruch 1, weiterhin umfassend:
- Kompilieren von Hilfsinformationen, die sich auf den Notfall beziehen, und wobei
- das Senden zumindest der Warnungsnachricht das Senden der Hilfsinformationen umfasst.

3. Verfahren nach Anspruch 2, wobei das Kompilieren von Hilfsinformationen das Kompilieren von Informationen umfasst, die sich entweder auf einen Notfallrettungsdienst, ein Krankenhaus, eine Botschaft oder einen Transportdienstbetreiber beziehen.

4. Verfahren nach Anspruch 2 oder Anspruch 3, wobei die Hilfsinformationen entweder eine Telefonnummer, eine Adresse oder eine Karte umfassen.

5. Verfahren nach einem der Ansprüche 1 bis 4, weiterhin umfassend: - Senden von Informationen an den Betreiber von Notfallwarnungsnachrichten, wobei die Informationen übermitteln, dass der Benutzer die Warnungsnachricht empfangen hat.

6. Verfahren nach einem der Ansprüche 1 bis 5, wobei der Notfalltyp entweder eine Naturkatastrophe, ein Unfall oder ein Verbrechen ist.

## Revendications

1. Un procédé d'un système de communication mobile destiné à fournir de l'information en relation avec une urgence à des utilisateurs de terminaux de communication dans ledit système de communication mobile, ledit procédé comprenant les étapes consistant à:
- établir un accord de service impliquant au moins un utilisateur et un opérateur du système de communication mobile, ledit accord comprenant au moins une identification dudit utilisateur et une période temporelle durant laquelle ledit utilisateur est autorisé à accéder à des avertissements d'urgence,
- recevoir un message d'avertissement d'urgence d'un fournisseur de messages d'avertissement d'urgence, ledit message comprenant une information concernant au moins un type d'urgence et un lieu d'urgence,
- transmettre, par diffusion, au moins ledit message d'avertissement,
- recevoir une requête d'information d'aide supplémentaire dudit utilisateur,
- décider si oui ou non ledit utilisateur est censé avoir accès à ladite information d'aide supplémentaire, ladite décision étant basée au moins sur ledit accord de service,
- fournir, en fonction de ladite décision, ladite information d'aide supplémentaire à l'utilisateur, et
- transmettre, à un destinataire spécifié, une confirmation que l'utilisateur a requis de l'information d'aide supplémentaire.

2. Procédé selon la revendication 1, comprenant en outre les étapes consistant à :
- compiler de l'information d'aide en relation avec ladite urgence, et dans lequel
- ladite transmission dudit au moins un message d'avertissement comprend la transmission de ladite information d'aide.

3. Procédé selon la revendication 2, dans lequel ladite étape consistant à compiler de l'information d'aide comprend une compilation d'information en relation avec l'un quelconque d'un service de secours d'urgence, d'un hôpital, d'une ambassade et d'un fournisseur de services de transport.

4. Procédé selon la revendication 2 ou la revendication 3, dans lequel ladite information d'aide comprend l'un quelconque d'un numéro de téléphone, une adresse ou une carte.

5. Procédé selon l'une quelconque des revendications 1 à 4, comprenant en outre les étapes consistant à: - transmettre de l'information au fournisseur de messages d'avertissement d'urgence, ladite information communiquant que l'utilisateur a reçu le message d'avertissement.

6. Procédé selon l'une quelconque des revendications 1 à 5, dans lequel ledit type d'urgence est l'un quelconque d'une catastrophe naturelle, un accident et un crime.
